Europäisches Patentamt

European Patent Office

Office européen des brevets

(11) Numéro de publication: **0 418 157 A1**

## DEMANDE DE BREVET EUROPEEN

(21) Numéro de dépôt: 90402518.6

(22) Date de dépôt: **13.09.90**

(51) Int. Cl.⁵: **D04B 35/20, G01N 21/89**

(30) Priorité: 15.09.89 FR 8912296

(43) Date de publication de la demande:
**20.03.91 Bulletin 91/12**

(84) Etats contractants désignés:
**DE ES GB IT**

(71) Demandeur: **Centre Technique Industriel dit:**
**INSTITUT TEXTILE DE FRANCE**
**280, avenue Aristide Briand B.P. 141**
**F-92223 Bagneux Cédex(FR)**

(72) Inventeur: **Bachmann, Jean-Marie**
**Les Bordes Aumont**
**F-10800 Saint Julien Les Villas(FR)**

(74) Mandataire: **Descourtieux, Philippe et al**
**CABINET BEAU de LOMENIE 55 rue**
**d'Amsterdam**
**F-75008 Paris(FR)**

(54) **Dispositif endoscopique pour la détection de défauts sur métier à tricoter circulaire.**

(57) Le dispositif pour la détection des défauts des articles en cours de tricotage sur métier à tricoter circulaire, notamment chaussants, comprend au moins une source lumineuse, un capteur opto-électrique (16) recevant la lumière provenant de ladite source après que celle-ci ait été réfléchie par le tricot (6) ou qu'elle ait traversé le tricot (6) , et des moyens de traitement des informations émises par le capteur opto-électrique (11). De manière caractéristique , il comporte un endoscope (7) rectiligne placé fixement selon l'axe (5) de rotation du métier (4) et dont le cône de visée (15) correspondant à la lentille distale (13) est tourné radialement vers le tricot (6) ; de plus la zone photo-sensible (21) du capteur opto-électrique (16) se trouve sensiblement dans le plan image de la lentille proximale (22) de l'endoscope (7).

FIG 1

# DISPOSITIF ENDOSCOPIQUE POUR LA DETECTION DE DEFAUTS SUR METIER A TRICOTER CIRCULAIRE

La présente invention concerne la détection optique des défauts des articles en cours de tricotage sur métier à tricoter circulaire, en particulier des articles chaussants, que ces défauts soient dus au tricotage lui-même ou à d'origines diverses par exemple la présence de fils plus fins ou plus gros , ou d'anomalies de vanisage.

On a déjà proposé des systèmes d'inspection des défauts sur tissu basés suz une exploration optique. De tels systèmes sont décrits dans la revue l'Industrie Textile N° 1067 page 277 à 279. Ils comprennent une source lumineuse, un capteur opto-électrique, recevant la lumière provenant de la source lumineuse et qui soit est réfléchie soit passe à travers le tissu, et des moyens de traitement des informations émises par le capteur opto-électrique. La pièce de tissu est déroulée à plat et passe devant des lampes fluorescentes tubulaires alimentées en tension continue constante, qui éclairent la pièce sur toute sa largeur. Des cellules photoélectriques , alignées côte à côte , couvrent toute la largeur de la pièce. Les lampes et les cellules sont, par rapport à la pièce, soit d'un même côté soit de part et d'autre. Dans le premier cas , les cellules mesurent la lumière qui est réfléchie par la pièce ; dans le second cas , elles mesurent la lumière traversant la pièce. Toute modification de structure de la pièce ou de son état de surface , provoquée par des défauts de tissage ou d'apprêt entraîne à l'intérieur de la cellule photoélectrique concernée une variation de courant, qui déclenche un signal , amplifié par un amplificateur puis transmis à un transducteur analogique-digital pour le traitement ultérieur du signal : par l'intermédiaire de seuils réglables , on détermine à partir de quelle grandeur les signaux ainsi identifiés sont retenus comme des défauts.

Les systèmes d'inspection des défauts sur tissus, décrits dans l'article précité , ne sont pas transposables en l'état pour la détection des défauts sur des articles en cours de tricotage , sur métier à tricoter circulaire et plus particulièrement les métiers de petits diamètres destinés aux articles chaussants. En effet dans ces métiers, le tricot tubulaire étant réalisé grâce à la rotation de la fonture puis enroulé sur un mandrin , la partie du tricot sur laquelle pourrait se faire l'inspection est très difficilement accessible.

Or on a trouvé et c'est ce qui fait l'objet de l'invention un dispositif optique de détection des défauts qui pallie l'inconvénient précité en ce qu'il permet la détection des défauts des articles en cours de tricotage sur métiers à tricoter circulaires, y compris sur les articles chaussants réalisés sur métiers de petit diamètre. Ce dispositif est du type connu en ce qu'il comprend une source lumineuse , un capteur opto-électrique recevant la lumière provenant de ladite source après que celle-ci ait été réfléchie par le tricot ou qu'elle ait traversé le tricot, et des moyens de traitement des informations émises par le capteur opto-électrique.

Selon l'invention, d'une part le dispositif comporte un endoscope rectiligne placé fixement selon l'axe de rotation du métier et dont le cône de visée correspondant à la lentille distale est tourné radialement vers le tricot ; d'autre part la zone photosensible du capteur opto-électrique se trouve sensiblement dans le plan image de la lentille proximale de l'endoscope.

Un endoscope , utilisé notamment dans le domaine médical, est un système optique comprenant une succession de lentilles et permettant d'explorer optiquement un endroit précis . Généralement il permet d'amener un flux lumineux sur la zone à explorer et de restituer la part dudit flux qui est réfléchie sur ladite zone. L'extrémité distale correspond à celle qui est placée en regard de la zone à explorer, tandis que l'extrémité proximale correspond à celle d'où est envoyé le flux lumineux incident et/ou est amené le flux réfléchi.

Ainsi dans le cadre de la présente invention , l'endoscope est un élément complémentaire du dispositif optique de détection des défauts, qui est indispensable pour permettre l'exploration d'une partie précise du tricot , de préférence cette partie étant à proximité des aiguilles , là où le tricot est dans un état d'extension uniforme , et aussi pour permettre de transmettre le flux lumineux , après exploration du tricot, dans un emplacement du métier qui ne soit pas encombré.

Selon un premier mode de réalisation, la source lumineuse comprend une source proprement dite et une fibre optique terminée par un prisme à réflexion totale, agencée de telle sorte que, la fibre optique étant montée fixement à l'intérieur du cylindre et près de la paroi de celui-ci, le prisme est dirigé radialement vers la lentille distale de l'endoscope. Dans ce premier mode de réalisation, le flux lumineux reçu par le capteur opto-électrique correspond à la lumière filtrée par une zone du tricot. Ce mode d'éclairage, par transmission, permet de révéler en contre-jour certains types de défauts : trous, finesses, grosseurs.

Selon un second mode de réalisation, mettant en oeuvre les propriétés habituelles de l'endoscope, le flux lumineux émis par la source proprement dite est véhiculé à l'intérieur de l'endoscope de sa partie proximale à sa partie distale. Dans ce second mode de réalisation, l'endoscope fait office à la fois de source lumineuse et de moyen de transmission de la lumière réfléchie par la zone explorée du tricot. Ce mode d'éclairage , par réflexion, permet de révéler des défauts présentant un contraste lumineux suffisant : présence de fil de couleur anormalement apparent , anomalies de motifs ou de vanisage.

Préférentiellement , les deux modes de réalisation ci-dessus sont combinés sur le même métier : dans ce cas , le dispositif de l'invention comporte deux sources lumineuses , l'une pour l'éclairage par transmission et l'autre pour l'éclairage par réflexion, et des moyens de commutation aptes à commuter alternativement les deux sources lumineuses. Ainsi l'endoscope véhicule alternativement vers le capteur opto-électrique un flux lumineux transmis et un flux lumineux réfléchi ; il est donc possible de détecter l'ensemble des défauts précités.

Les moyens de traitement des informations émises par le capteur opto-électrique comportent des moyens de synchronisation , aptes à réaliser un échantillonnage à une fréquence qui est asservie à la rotation du métier , de telle sorte que les zones d'exploration successives sur le tricot se chevauchent aussi bien en colonnes qu'en rangées. On assure ainsi une exploration totale du tricot tubulaire sans perte d'information.

Les moyens de synchronisation comprennent par exemple un codeur incrémental , fournissant à chaque tour de métier un nombre prédéterminé de tops d'échantillonnage du signal analogique délivré par le capteur opto-électrique ; un capteur de proximité fournissant un signal rapide de début de rangée ; un capteur synchrone avec le programme de tricotage , apte à initialiser le dispositif sur la première maille de l'article ; et des moyens aptes à indiquer au dispositif le début et la fin des mouvements alternatifs du métier, correspondant aux talons et aux pointes dans le cas des articles chaussants, ces moyens étant soit des capteurs soit des signaux émis en fonction du programme de tricotage.

Le capteur photo-électrique est par exemple une photo-diode présentant une courbe de réponse identique au spectre de longueur d'onde de la source lumineuse.

D'autres caractéristiques et avantages de l'invention ressortiront plus clairement de la description qui va être faite du mode préféré de réalisation du dispositif endoscopique pour la détection des défauts , monté sur un métier chaussant, illustré par le dessin annexé dans lequel :

La figure 1 est une vue schématique en coupe du métier chaussant équipé du dispositif endoscopique à deux sources lumineuses.

La figure 2 est une vue schématique en coupe de la partie proximale de l'endoscope et du capteur opto-électrique.

La figure 3 montre la courbe correspondant à l'image de référence.

La figure 4 montre sous forme d'un diagramme la fonction de codage.

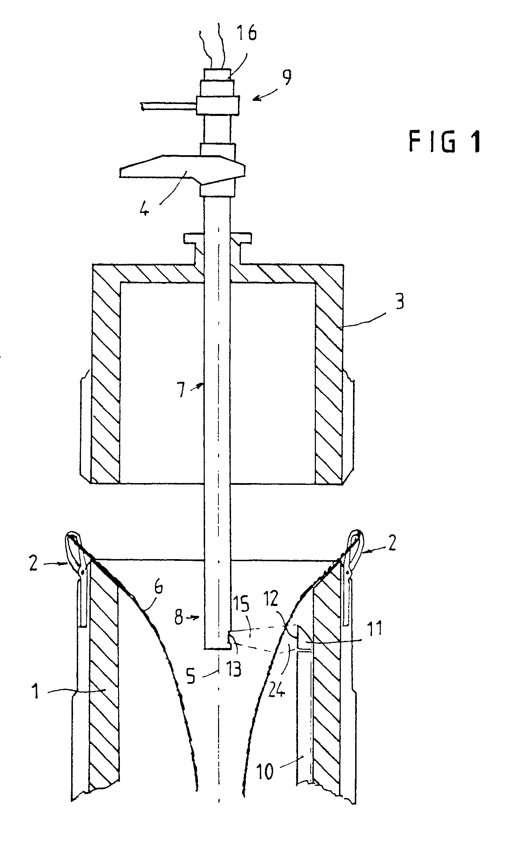

Un métier à tricoter les chaussettes , par exemple type double cylindre , est représenté sur la figure 1 de façon très schématique.

Les parties hachurées correspondent à une vue en coupe des cylindres inférieur 1 et supérieur 3. Ces cylindres comportent des rainures longitudinales dans lesquelles coulissent les aiguilles . Lesdites aiguilles de configuration symétrique pour un métier double cylindre peuvent travailler dans le cylindre inférieur comme représenté sur la figure 1 ou travailler dans le cylindre supérieur.

Les cylindres 1 et 3 sont commandés en rotation autour de l'axe 5.

En cours de tricotage , la chaussette , qui a la forme d'un tube 6 est accrochée sur les aiguilles 2 et est tirée à l'intérieur du cylindre 1 par un extracteur non représenté.

L'endoscope 7 est rectiligne , il est monté , de manière fixe , selon l'axe 5 de rotation du métier. Sa partie distale 8 est située dans la partie haute du cylindre 1 ; sa partie proximale 9 est extérieure au corps du métier , elle est située au-dessus du cylindre supérieur 3 .

Une fibre optique 10 est montée de manière fixe parallèlement à une génératrice intérieure du cylindre 1 ; elle est terminée par un prisme 11 à réflexion totale à son extrémité supérieure. Son extrémité inférieure , non représentée, est assortie d'une première source lumineuse.

La face 12 de sortie du prisme 11 fait face à la lentille 13 distale de l'endoscope 7, de telle sorte que le flux lumineux provenant de la première source , guidé par la fibre optique 10 et réfléchi par le prisme 11 soit dirigé sur la lentille distale 13.

A proximité de sa partie proximale 9, l'endoscope 7 comporte un boitier 4 renfermant une seconde source lumineuse et un guide de lumière raccordé sur la partie rectiligne de l'endoscope 7. Le flux lumineux provenant de cette seconde source est guidé par le système optique interne de l'endoscope 7 et sort de celui-ci par la lentille distale 9, perpendiculairement à l'axe 5 de l'endoscope 7, selon un cône de visée 15 ayant 30° d'ouverture.

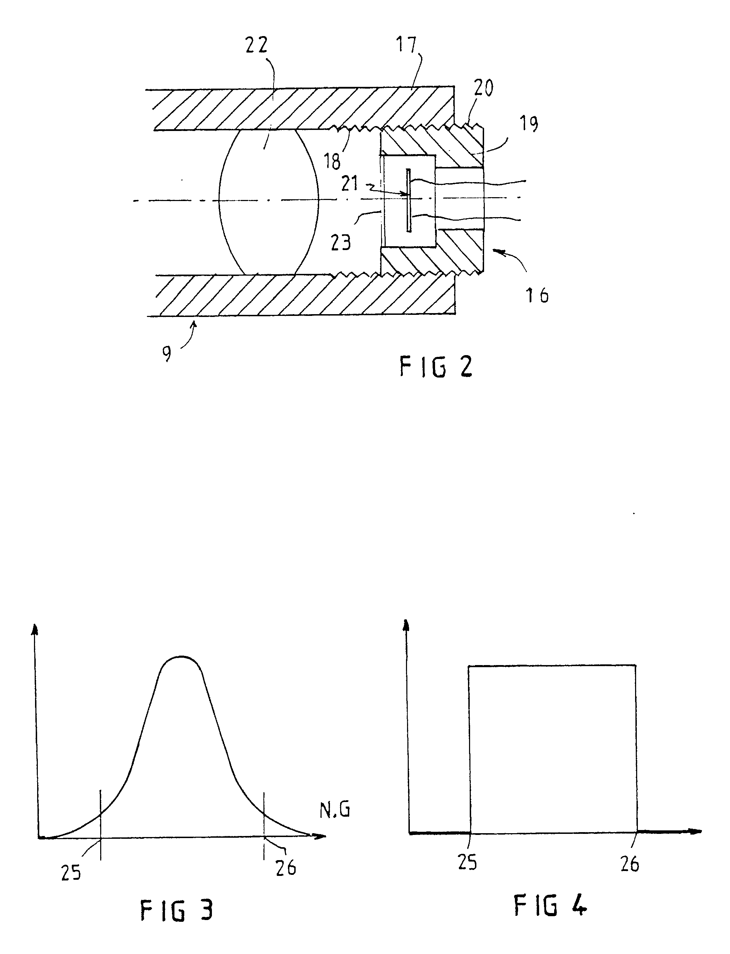

Le capteur opto-électrique 16 est une photodiode , fixée à la partie proximale 9 de l'endoscope 7, comme cela est montré de façon schématique sur la figure 2 . La partie proximale 9 de l'endoscope 7 est terminée par un embout 17 cylindrique creux dont la surface intérieure est munie d'un filetage 18. Le capteur opto-électrique 16 est logé à l'intérieur d'un support cylindrique 19 dont la surface extérieure est munie d'un filetage 20 apte à coopérer avec le filetage 18 de l'embout 17. Les filetages 18 et 20 sont à pas micrométrique et permettent un réglage fin du placement du support 19 par rapport à l'embout 17.

La surface extérieure 21 de la photodiode , de l'ordre de 5mm² , correspondant à la zone photosensible du capteur opto-électrique 16, est placée précisément dans le plan image de la lentille proximale 22 de l'endoscope.

La face avant du support 19 du capteur 16 est fermée par une fenêtre 23, transparente au flux lumineux.

La photodiode 16 est connectée aux moyens de traitement non représentés et comportant les éléments suivants. Un codeur incrémental fournit à chaque tour de métier un nombre de tops d'échantillonnage du signal analogique délivré par la photo-diode 16, ce nombre est fonction du type de métier , il correspond par exemple à un échantillonnage par demi-colonne de maille. Un capteur de proximité fournit un signal rapide de début de rangée. Un capteur , synchrone avec le programme de tricotage , définit le départ de la chaussette en initialisant le système sur la première maille de chaque chaussette. Un capteur indique le début et la fin des mouvements alternatifs du métier , correspondant aux talons et aux pointes des chaussettes . Tout cet ensemble permet de repérer précisément par ses coordonnées cartésiennes chaque signal échantillonné.

Les deux sources lumineuses sont reliées à un commutateur, alternant l'alimentation de chaque source.

Le fonctionnement du dispositif est le suivant. Par simplification la présente explication ne concerne que le flux lumineux provenant de la première source et qui est transmis à travers le tricot. Elle s 'appliquerait aussi bien au flux provenant de la seconde source et réfléchie par le tricot, de même à l'alternance de ces deux flux.

Lors du tricotage , le tricot 6, descendant des aiguilles 2, passe sous extension uniformément répartie dans l'espace compris entre le prisme 11 et la partie distale 8 de l'endoscope 7. Le flux lumineux 24, émis par la première source lumineuse et guidé par la fibre 10, est réfléchi par le prisme 11 ; il parvient à la lentille distale 13 de l'endoscope 7 après avoir traversé une zone déterminée du tricot 6. Ainsi le flux reçu par la lentille distale 13 correspond à l'image de la zone explorée du tricot 6.

La dimension de la zone explorée , c'est-à-dire éclairée, est adaptée à la jauge , pour obtenir un niveau de filtrage et de contraste optimal : elle est par exemple de 6 mm x 6 mm pour une jauge 14. De préférence elle correspond à un carré de 4 mailles de côté.

Le flux lumineux reçu par la lentille distale 13 est transmis dans l'endoscope 7 jusqu 'au plan image de la lentille proximale 22, dans lequel plan a été positionnée la surface extérieure 21 de la photodiode 16. Ainsi la photodiode 16 reçoit l'image réelle de la zone explorée.

Du fait de la rotation du cylindre 1 et donc du tricot 6, ainsi que de la descente progressive du tricot 6 vers l'intérieur du cylindre 1 au fur et à mesure du tricotage, le flux lumineux 23 éclaire en continu le tricot selon une hélice. Le codeur incrémental permet de découper l'information continue fournie par la photodiode 16 en une succession d'informations instantanées , chacune d'elles correspondant à l'image réelle d'une zone explorée. Le nombre de tops d'échantillonnage par tour de métier est fonction de la dimension du métier , il est par exemple de 400 pour un métier ayant 200 aiguilles.

Le nombre de tops et la dimension de la zone explorée sont déterminés de telle sorte qu'il existe un recouvrement partiel des zones explorées successives, tant en rangées qu'en colonnes.

Ainsi les moyens de traitement , connectés à la photodiode 16, recoivent et mémorisent pendant le tricotage d'une chaussette une succession d'informations, chacune d'elles correspondant à une zone déterminée de la chaussette. L'ensemble de ces informations représente la carte de la lumière transmise à travers la chaussette. Chaque information instantanée , dite pixel , est repérée par le numéro de la rangée et le numéro de la demi-colonne. L'intensité de chaque pixel , ou niveau de gris , est proportionnelle à la quantité de lumière traversant la zone explorée. L'origine dès coordon-nées est définie grâce aux différents capteurs assurant la synchronisation. Chaque pixel repéré est codé au niveau de gris puis est mémorisé sur un plan-image support du traitement informatique.

Le codage au niveau de gris est réalisé par exemple à l'aide d'une référence sans défaut. La figure 3 est une courbe représentant l'histogramme de niveau de gris pour l'image réelle d'un pixel , pour une chaussette de référence sans défaut. A l'aide de l'histogramme de l'image de référence, on détermine les niveaux de gris (N.G.) minimum 25 et maximum 26, qui constituent les deux limites caractéristiques de l'image pour une probabilité donnée , entre le niveau de gris (N.G.) correspondant au noir (égal à zéro) et le niveau de gris (N.G.) correspondant au blanc (égal à 255). La matrice de codage est montrée à la figure 4 sous forme d'un diagramme ayant en abscisse le niveau de gris (N.G.) d'entrée, c'est-à-dire correspondant à l'information transmise par la photodiode 16, et en ordonnée le niveau de gris (N.G.) de sortie , c'est-à-dire correspondant à l'information restituée et mémorisée . Les niveaux de gris du pixel compris entre les valeurs minimum 25 et maximum 26 sont restitués sous forme d'une tache blanche. Les niveaux de gris extérieurs à cet intervalle sont considérés comme des défauts et sont restitués en noir.

Ce codage s'effectue en temps réel . A l'issue du tricotage de la chaussette de référence on obtient une image totalement blanche, sauf pour les points correspondant aux niveaux de l'image non pris en compte dans la détermination des seuils 25 et 26 qui apparaissent en noir.

Pendant le tricotage de toutes les chaussettes , sur la base de cette référence , les mesures effectuées sont codées selon la même matrice en temps réel. A l'issue du tricotage de chaque chaussette à contrôler , on obtient une image que l'on filtre comparativement à l'image de référence . L'analyse des points noirs de l'image , après ce filtrage , permet de déterminer précisément l'existence ,la nature et la localisation des défauts. L'identification des défauts permet, à l'aide de moyens adaptés, une prise de décision subséquente, par exemple arrêt immédiat du métier en cas de détection d'un défaut vertical continu ou répétitif, par exemple arrêt conditionnel en cas de détection d'un défaut horizontal.

Cette phase de contrôle peut s'effectuer en temps réel avec décision prise immédiatement pendant le tricotage dans le temps d'une chaussette. Dans ce dernier cas , le système informatique est bi-tâche , c'est-à-dire qu'il réalise simultanément l'acquisition d'une image donnée et traite l'image précédente.

L'invention n'est pas limitée au mode de réalisation qui vient d'être décrit à titre d'exemple , mais en couvre toutes les variantes . En particulier l'acquisition de l'image à la partie distale 9 de l'endoscope 7 peut s'effectuer à l'aide d'autres types de capteurs opto-électriques que la photodiode, par exemple un capteur matriciel à CCD ou un capteur linéaire à CCD.

## Revendications

1. Dispositif pour la détection des défauts des articles en cours de tricotage sur métier à tricoter circulaire, du type comprenant au moins une source lumineuse , un capteur opto-électrique (16, recevant la lumière provenant de ladite source après que celle-ci ait été réfléchie par le tricot (6) ou qu'elle ait traversé le tricot (6), et des moyens de traitement des informations émises par le capteur opto-électrique (16), caractérisé en ce qu'il comporte un endoscope (7) rectiligne placé fixement selon l'axe (5) de rotation du métier (4) et dont le cône de visée (15) correspondant à la lentille distale (13) est tourné radialement vers le tricot (6) et en ce que la zone photosensible (21) du capteur opto-électrique (16) se trouve sensiblement dans le plan image de la lentille proximale (22) de l'endoscope (7).

2. Dispositif selon la revendication 1 caractérisé en ce que la lentille distale (13) de l'endoscope (7) est situé en regard d'une zone de tricot (6) proche des aiguilles (2).

3. Dispositif selon la revendication 1 caractérisé en ce que la source lumineuse comprend une source proprement dite et une fibre optique (10) terminée par un prisme (11) à réflexion totale, agencée de telle sorte que , la fibre optique (10) étant montée fixement à l'intérieur du cylindre (1) et près de la paroi de celui-ci , le prisme (11) est dirigé radialement vers la lentille distale (13) de l'endoscope (7).

4. Dispositif selon la revendication 1 caractérisé en ce que l'endoscope (7) est apte à transmettre le flux lumineux émis par la source lumineuse à proximité de sa partie proximale (9) jusqu'à sa partie distale (8).

5. Dispositif selon la revendication 1 caractérisé en ce qu'il comporte :

a) une première source lumineuse comprenant une source proprement dite et une fibre optique (10) terminée par un prisme (11) à réflexion totale , agencée de telle sorte que , la fibre optique (10) étant montée fixement à l'intérieur du cylindre (1) et près de la paroi de celui-ci, le prisme (11) est dirigé radialement vers la lentille distale (13, de l'endoscope (7) ,

b) une seconde source lumineuse transmettant un flux lumineux de la partie proximale (9) à la partie distale (8) de l'endoscope,

c) et des moyens de commutation , aptes à commuter alternativement les deux sources lumineuses.

6. Dispositif selon la revendication 1 caractérisé en ce que les moyens de traitement des informations émises par le capteur opto-électrique (16) comportent des moyens de synchronisation, aptes à réaliser un échantillonnage à une fréquence qui est asservie à la rotation du métier , de telle sorte que les zones d'exploration successives sur le tricot se chevauchent aussi bien en colonnes qu'en rangées.

7. Dispositif selon la revendication 6 caractérisé en ce que les moyens de synchronisation comprennent un codeur incrémental, fournissant à chaque tour de métier un nombre prédéterminé de tops d'échantillonnage du signal analogique délivré par le capteur opto-électrique ; un capteur de proximité fournissant un signal rapide de début de rangée ; un capteur synchrone avec le programme de tricotage , apte à initialiser le dispositif sur la première maille de l'article.

8. Dispositif selon la revendication 7 caractérisé en ce que, s'agissant d'articles chaussants, les moyens de synchronisation comprennent des moyens aptes à indiquer au dispositif le début et la fin des mouvements alternatifs du métier , correspondant aux talons et aux pointes , ces moyens étant soit des capteurs soit des signaux émis en fonction du programme de tricotage.

9. Dispositif selon la revendication 1 caractérisé en ce que le capteur photo-électrique est une photo-diode présentant une courbe de réponse identique au spectre de longueur d'onde de la source lumineuse.

FIG 1

FIG 2

FIG 3

FIG 4

# RAPPORT DE RECHERCHE EUROPEENNE

**EP 90 40 2518**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-C-3 536 991   (SIPRA) <br> – – – | | D 04 B 35/20 <br> G 01 N 21/89 |
| A | US-A-3 761 186   (T.D. WASON) <br> – – – | | |
| A | US-A-3 116 621   (G. KLEIN) <br> – – – | | |
| A | EP-A-0 310 838   (PROTECHNA HERBST GmbH & CO.) <br> – – – | | |
| A | PATENT ABSTRACTS OF JAPAN, vol. 13, no. 472 (C-647)[3820], 25 octobre 1984; <br> & JP-A-1 183 563 (ATENE COMPUTER SYST. K.K.) 21-07-1989 <br> – – – – – | | |

|  | DOMAINES TECHNIQUES RECHERCHES (Int. Cl.5) |
|---|---|
| | D 04 B <br> G 01 N |

Le présent rapport de recherche a été établi pour toutes les revendications

| Lieu de la recherche | Date d'achèvement de la recherche | Examinateur |
|---|---|---|
| La Haye | 22 octobre 90 | VAN DEN BULCKE E. |